Europäisches Patentamt

European Patent Office

Office européen des brevets

(19)

(11) Publication number: **0 333 757 B1**

(12) # EUROPEAN PATENT SPECIFICATION

(45) Date of publication of patent specification: **12.05.93**

(51) Int. Cl.5: **C03C 11/00**, G21F 9/16, C01F 17/00

(21) Application number: **87908069.5**

(22) Date of filing: **20.11.87**

(86) International application number: **PCT/US87/03006**

(87) International publication number: **WO 88/03915 (02.06.88 88/12)**

(54) PROCESS FOR THE CHROMATOGRAPHIC SEPARATION OF METAL IONS.

(30) Priority: **20.11.86 US 932882**
**30.06.87 US 68133**

(43) Date of publication of application:
**27.09.89 Bulletin 89/39**

(45) Publication of the grant of the patent:
**12.05.93 Bulletin 93/19**

(84) Designated Contracting States:
**BE DE FR GB**

(56) References cited:
**EP-A- 0 186 128     GB-A- 862 688**
**US-A- 2 472 490     US-A- 2 943 059**
**US-A- 3 522 187     US-A- 3 938 974**
**US-A- 4 333 847     US-A- 4 469 847**

(73) Proprietor: **LITOVITZ, Theodore Aaron**
**3022 Friends Road**
**Annapolis, MD 21401(US)**

Proprietor: **MACEDO, Pedro B.**
**6100 Highboro Drive**
**Bethesda, MD 20817(US)**

(72) Inventor: **HOJAJI, Hamid**
**8117 Lilly Stone Drive**
**Bethesda, MD 20817(US)**
Inventor: **BARKATT, Aaron**
**1120 Dunoon Road**
**Silver Spring, MD 20903(US)**
Inventor: **MACEDO, Pedro, B.**
**6100 Highboro Drive**
**Bethesda, MD 20817(US)**

(74) Representative: **Barz, Peter, Dr. et al**
**Patentanwälte Dipl.- Ing. G. Dannenberg Dr.**
**P. Weinhold, Dr. D. Gudel Dipl.-Ing. S.**
**Schubert, Dr. P. Barz Siegfriedstrasse 8**
**W- 8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 333 757 B1

EP 0 333 757 B1

**Description**

This invention relates to the ion exchange separation of rare earth elements, actinides or mixtures thereof from each other.

According to Jaffe, US − A − 2,897,050 the term "rare earths" is used to designate the group of elements between lanthanum, atomic number 57, and lutecium, atomic number 71, inclusive, and to these elements should be added yttrium, atomic number 39, and scandium, atomic number 21, which are nearly identical with rare earths in properties and usually occur together with them in natural deposits.

In addition, according to Jaffe, US − A − 2,897,050, since the rare earths are intimately mixed together in the natural states and have very similar chemical and physical properties, differing each from the other very slightly, they cannot be easily separated. A number of processes have been suggested for separating the rare earth elements. These include: fractional crystallization or precipitation, solvent extraction, and ion exchange. However, according to the same patent, all these methods are tedious and difficult to control.

The actinide elements constitute another group of important elements which resemble each other in chemical properties. They are also similar, in particular when ions of the same oxidation states are considered, to the rare earths.

The most widely used technique of separating the rare earths is solvent extraction, described by Peppard et al., US − A − 2,955,913, and by Chiola et al., US − A − 3,598,913.

Ion exchange offers significant advantages over solvent extraction, including a much smaller plate height, applicability to multi − element isolation and higher ultimate purity (Kirk − Othmer, Encyclopedia of Chemical Technology, 3rd edition, Volume 19, Wiley − Interscience, New York, 1982). Ion exchange is not widely used, however, because it relies on elution alone to separate the various rare earths, and therefore many theoretical plates are necessary, requiring extremely fine control over operating conditions to prevent band broadening, as well as slow flow rates and limited influent concentration. Another limiting feature of the elution technique is that the order of elution is always determined by the relative magnitude of the stability constants of the complexes of the various rare earths, and that in all cases heavier lanthanides have higher stability constants and therefore desorb more rapidly, as described by Spedding et al., US − A − 2,798,789 and by Choppin et al., US − A − 2,925,431. For instance, $Nd^{3+}$ is eluted before $La^{3+}$.

US − A − 2943059 describes porous glass articles with high ion exchange capacity. Said glass contains $PO_{2.5}$ in an amount of about 20 to 70 mole percent and has a maximum $SiO_2$ content of about 40 mol percent. GB − A − 862688 is directed to a process for separating ions through ion exchange by means of an organic ($SiO_2$ − free) ion exchange resin. US − A − 2472490 describes a process for preparing porous glass catalysts wherein a glass melt containing 55 to 75 percent silica is heated and thereafter is leached with an acidic aqueous solution.

It is an object of this invention to provide a process for the separation of rare earth values, actinides or mixtures thereof from each other by ion exchange in which a substantial extent of separation takes place without the introduction of a complexing agent.

A further object of the present invention is to provide a process of selectively removing more strongly complexable rare earth ions from a stream containing less strongly complexable rare earth ions.

Yet a further object of the present invention is to provide a process for separation of rare earths, actinides or mixtures thereof from each other which uses high capacity, high selectivity, or a combination of these properties.

Another object of the present invention is to provide a process of producing highly pure lanthanum with a very low content of heavier rare earths for optical applications.

Yet another object of the present invention is to provide a method of producing highly pure individual rare earths or groups of rare earths.

The present invention provides a process for chromatographically separating from each other rare earth ions, actinides ions, or mixtures thereof in solution by passing the solution through an ion exchange material to separate the rare earths, actinides, or mixtures thereof. The ion exchange material has a surface area of about 5 − 1500 $m^2$/g and contains at least 50 mol percent silica. The ion exchange material may include from 0 to about 35 mol percent, preferably at least about 0.2 mol percent, and particularly from 1 to 30 mol percent, of a metal oxide or hydrous metal oxide. The metal oxide or hydrous metal oxide is selected from the group consisting of the transition metals of Groups IIIa, IVa, Va, VIa, VIIa, VIII, Ib, and IIb of the Periodic Table, aluminum, gallium, indium, thallium, tin, lead, bismuth, beryllium, the actinides and mixtures thereof, preferably titania zirconia, hafnia, thoria and mixtures thereof. The ion exchange material is impregnated with a liquid containing alkali metal cations, Group Ib metal cations, ammonium cations, organic amines, ore mixtures thereof, at a pH range above about 9, for a period of time to provide a distribution of the cations within the ion exchange material. The preferred cations are alkali metal cations, ammonium cations, organic

2

EP 0 333 757 B1

amines, or mixtures thereof. The ion exchange material preferably contains about 0.3 mol percent to about 10 mol percent of alkali metal cations. A plurality of fractions of the solution is collected as the solution passes through the ion exchange material, preferably in a column. This process is particularly preferred for separating rare earth ions and especially lanthanum and neodymium. It is particularly preferred to purify lanthanum to contain less than 0.1 ppm, preferably less than 0.01 ppm, of neodymium.

The ion exchange material is preferably porous glass. The porous glass is prepared by a process comprising producing a base glass from a melt which contains 40 to 80 mol percent of silica and between 0 and 35 mol percent of one or more transition metal oxides selected from the group consisting of the transition metals of Groups IVa, Va, VIa, VIIa and VIII of the Periodic Table and of the actinides, separating the base glass by heat treatment into a least a soluble phase and an insoluble phase, and leaching out the soluble phase to obtain a porous glass containing at least 50 mol percent silica and preferably at least 0.2 mol percent of the transition metal oxides. Alternatively, the porous glass is prepared by melting a base glass which contains 40 to 80 mol percent silica, separating the base glass by heat treatment into at least a soluble phase and an insoluble phase, leaching the soluble phase and treating the phase separated glass with a solution of one or more salts of said transition metals of Groups IIIa, IVa, Va, VIa, VIIa, VIII, Ib and IIb of the Periodic Table, aluminum, gallium, indium, thallium, tin, lead, bismuth, beryllium and the actinides.

The above process of melting the original glass in the presence of an additive oxide, followed by phase separation and leaching, relates to the production of glasses which contain at least 50 mol percent $SiO_2$, preferably at least 60 mol percent $SiO_2$, and, in addition, 0.01 to 35 mol percent of one or more transition metal oxides selected from the group consisting of the oxides of Groups IVa, Va, and VIa, and the bottom two rows of Groups VIII and VIIa of the Periodic Table, and of the actinides. (Group nomenclature is according to Cotton and Wilkinson, Advanced Inorganic Chemistry, 4th ed., Wiley − Interscience, New York, 1980.) Examples of such, oxides may include $Ti_2O_3$, $TiO_2$, $ZrO_2$, $HfO_2$, $ThO_2$, $NbO_2$, $Ta_2O_5$, $Cr_2O_3$, $ReO_2$, $RuO_2$, $Ph_2O_3$, $RhO_2$, $PdO$, $Os_2O_3$, $OsO_2$, $IrO_2$, $PtO$, and $PtO_2$. Preferred glass compositions include 0.2 − 25 mol percent of the dioxides of the elements of Group IVa or 0.01 − 10 mol percent of the dioxides of the elements of the bottom two rows of Group VIII and rhenium. The most preferred compositions include 1 − 25 mol percent of one or more oxides belonging to the group consisting of $TiO_2$, $ZrO_2$, and $HfO_2$.

In one embodiment the phase separated glass can be treated in a solution of a salt of the desired additive. Solutions of many of the salts of the additives used, such as Al$(NO_3)_3$, $ZrO(NO_3)_2$, and $Zr(NO_3)_4$, are acidic. It is also possible to enhance the acidity of such a solution by adding a suitable mineral acid, for instance $HNO_3$, if necessary. The treatment with such metal salt solutions produces in a single step a leached porous high silica glass with the desired additive, for instance Al or Zr, without requiring separation between the leaching and additive introduction step and without requiring a precipitation step following the treatment with the additive salt solution. This combination of steps can be used even at relatively low temperatures such as room temperature.

Overall, porous glasses containing metal additives such as zirconium, aluminum and titanium, subjected to treatment with alkali ions, Group Ib ions, ammonium ions, organic amines, or combinations of the above, in moderately basic media, are consistently found to have significantly better performance as ion exchange materials compared with porous silicate media which have not been prepared by combination of metal additive doping and subsequent primary ion exchange treatment.

In summary, a method for producing high silica porous glass with transition metal oxide additives useful for the process of the present invention, involves the following steps:

(a) glass melting

(b) phase separation

(c1) leaching or (c2) combined leaching and additive impregnation

(d) surface treatment

The transition metal additive species is introduced during step (a), step (c2), or both.

3

(a) Glass melting

In the preferred embodiment the composition range of the base glass would be

Table 1
Mol    Percent

|  | Broad Range | Preferred Range | Most Preferred Range |
|---|---|---|---|
| $SiO_2$ | 30 – 80 | 40 – 70 | 44 – 59 |
| $B_2O_3$ | 15 – 50 | 24 – 42 | 24 – 37 |
| $R_2O$ | 4 – 11 | 4 – 10 | 6 – 10 |
| (as $Na_2O$) | | | |
| $Al_2O_3$ | 0 – 5 | 0 – 3 | 0 – 2 |
| MxOy | 0.2(0) – 35 | 0.5(0) – 30 | 1(0) – 25 |
| $NuO_2$ | 0.01(0) – 25 | 0.05(0) – 10 | 0.2(0) – 25 |

In this Table, the amount of $SiO_2$ or a part of it may be replaced by a corresponding amount of $GeO_2$. $R_2O$ denotes any combination of alkali metal or alkaline earth metal oxides. $M_xO_y$ designates one or more oxide additives selected from the group consisting of the oxides of Groups IVa, Va and VIa of the Periodic Table, or of the actinides. $N_uO_z$ designates one or more oxide additives selected from the group consisting of the oxides of Groups VIII and VIIa of the Periodic Table. It should be noted that for all three composition ranges listed in Table 1 two lower limits appear in the Table, and one of them is zero. The zero lower limit for $M_xO_y$ applies in the case of only $N_uO_z$ is added to the glass and in the case that $M_xO_y$ is added only in the course of step (c2). The zero lower limit for $N_uO_z$ applies in the case that only $M_xO_y$ is added to the glass or that $N_uO_z$ is added only in the course of step (c2). In practice, the amounts of $M_xO_y$ and $N_uO_z$ are limited by their solubilities in the alkali borosilicate melt and by the capacity of the resulting glass to resist crystallization upon subsequent cooling. The base glass composition is most preferably selected such that a homogeneous glass is easily made below about 1500°C, i.e. the mixture has a viscosity of below $10^5$ mPa•s (1000 poise) at 1500°C. Conventional glass melting procedures are used.

(b) Phase separation

(c1) Leaching

(c2) Combined leaching and additive impregnation

In one embodiment, the heat – treated, phase – separated glass is treated with a solution of the additive, such as aluminum or zirconium, in order to leach out the soft phase and to introduce the additive onto the porous glass surface. This embodiment is the one used in all cases where the additive has not been incorporated in the original melt, i.e. where no $M_xO_y$ or $N_uO_z$ is intentionally introduced into the melt composition used in step (a). However, this embodiment can also be used, if desired, to introduce an additive from solution onto a porous glass structure prepared from a melt composition formulated in step (a) to contain the same additive, another additive, or a combination of additives.

The additives used in step (c2) are selected from the group consisting of the oxides of the alkaline earth metals, of the transition metals consisting of Groups IIIa, IVa, Va, VIa, VIIa, VIII, Ib, and IIb of the Periodic Table, and of aluminum, gallium, indium, thallium, tin, lead, bismuth, the rare earth elements, and the actinides. The preferred oxides are those of aluminum, gallium, tin, lead, the alkaline earth metals, lanthanum, the rare earth elements, vanadium, chromium, manganese, iron, cobalt, nickel, copper, zinc, titanium, zirconium, hafnium, thorium, and ruthenium. The most preferred oxides are those of aluminum, iron, and zirconium. The porous glasses modified by treatment with a solution of the additive in step (c2) contain at least 60 mol percent silica, preferably at least 70 mol percent $SiO_2$, most preferably at least 75 mol percent $SiO_2$ on a dry basis. The amount of additive introduced instep (c2) is between 0.005 and 25 mol percent, preferably between 0.1 and 10 mol percent, most preferably between 1 and 10 mol percent. The solution used for combined leaching and impregnation preferably contains at least 0.02 g/L of the metal additive on an oxide basis, most preferably at least 2 g/L. The pH is preferably below 4, most preferably below 3. In the case of many metal additives, such as aluminum and zirconium, salt solutions containing sufficiently high concentrations of the metal ion are, in general, significantly acidic. In the case of soluble neutral or near−neutral salts acid may be added to the solution to facilitate leaching. A preferred technique consists of the use of solutions wherein the concentration of the metal species does not exceed, or does not significantly exceed, the solubility limit. The contact between the glass and the solution may be carried out at relatively low temperatures, such as room temperature, or at higher temperatures. If the temperature approaches the boiling point of the solution it is necessary to take precautions to prevent excessive evaporation losses and thermal precipitation in the additive solution.

(d) Surface treatments

Following the treatment of the glass with the leaching/additive impregnation medium, it can in principle be used as a sorbent, an anion exchanger, or a cation exchanger. The same applies to porous glasses prepared by co−melting according to step (a) or by a combination of co−melting and treatment with a leaching/impregnation solution. According to the present invention, the performance of the glass as a cation exchanger is improved by subjecting it to further treatment with a liquid containing alkali metal cations, Group Ib metal cations, ammonium cations, organic cations, or mixtures thereof, said liquid being maintained at a moderately alkaline pH.

It has been surprisingly found that ion exchange materials prepared according to the above process are very effective in separating rare earths from each other. One unique feature of these materials is that effective separation of the rare earths takes place upon passing a solution in which several of them are present through a bed made up of the material without adding a complexing agent. This simplifies the operation and enhances the effectiveness of the separation since the sorption process, rather than subsequent elution alone, is highly selective. Another important distinction between the present invention and previously reported ion exchange operations is that the more strongly complexable rare earth ions such as $Nd^{3+}$ are retained on the bed in preference to less strongly complexable rare earth ions such as $La^{3+}$. This can be a major advantage in cases where it is necessary to remove small amounts of more strongly complexable rare earth ions from a majority of less strongly complexable ions, for instance in removing traces of Nd from La used in light transmission applications, since sorption of a minority contaminant from a flowing stream of the majority species is the preferred mode of decontamination by means of ion exchange, providing much higher capacities and higher decontamination factors than an operation involving sorption of the majority species.

The literature also adequately describes the preparation of silica gel compositions which can be employed in this invention when treated to contain suitable amounts of transition metal oxide additives. These materials are available, for example, as LUDOX® silica gel, sold by E. I. DuPont de Nemours & Co., which contains 0.08 to 0.6 wt. percent $Na_2O$ as titrable alkali believed to be present as silicon−bonded NaO−groups.

Another class of materials which can be employed in this invention includes polymerized or partially polymerized systems prepared by means of processes associated with the sol−gel technique and consisting of single−component (in particular, high−silica) or multi−component (e.g., $Na_2O − B_2O_3 − SiO_2$, $SiO_2 − TiO_2$) compositions (Yoldas, J. Mater. Sci., 14, 1843 (1979); Yoldas, J. Non−cryst. Solids 38, 81 (1980); Mukherjee, in Materials Processing in the Reduces Gravity Environment of Space, Elsevier, 1982).

It was found that introduction of the metal oxide or hydrous metal oxide additive greatly improves the effectiveness of the porous glass in separating rare earths. Treatment of the porous glass with alkali metal cations, Group Ib metal cations, ammonium cations, organic amines or mixtures thereof, is necessary to produce materials with significant capacity for the separation of rare earth ions. Surprisingly it was found that while in the case of glasses containing low level of metal oxide or hydrous metal oxide additives, performance in separating rare earth ions improves with increasing additive content, this trend is arrested when a certain additive content is reached. Glasses with higher additive content do not appear to perform significantly better than glasses with a moderate additive content, in the case of $ZrO_2$ between about 10 and about 15 weight percent of the porous glass material.

The invention is further illustrated by the following specific, non−limiting examples:

EXAMPLE 1

This Example illustrates the melting of glass compositions which can be subsequently used to produce porous glass with metal oxide additives.

The glass compositions shown in Table 2 were prepared by mixing together and melting batches made up of the oxides listed in this Table or precursors of such oxides such as hydroxides (in the case of boron) or carbonates (in the case of the alkali metals). These batches were melted in platinum crucibles at temperatures up to about 1450°C. Glass rods drawn out of the melt were pulverized, dissolved in aqueous hydrofluoric acid and analyzed by means of dc plasma spectrometry to determine their composition.

Table 2

| Glass no. | Composition, mol % | | | | | | | | | |
|---|---|---|---|---|---|---|---|---|---|---|
|  | $SiO_2$ | $B_2O_3$ | $Na_2O$ | $K_2O$ | $Al_2O_3$ | $TiO_2$ | $ZrO_2$ | $HfO_2$ | $RuO_2$ | $Cr_2O_3$ |
| 1 | 57.1 | 33.9 | 9.0 | | | | | | | |
| 2 | 58.9 | 31.0 | 6.8 | 3.3 | | | | | | |
| 3 | 55.2 | 33.7 | 3.8 | 4.0 | | 3.3 | | | | |
| 4 | 52.1 | 30.9 | 9.0 | | | 8.0 | | | | |
| 5 | 49.8 | 30.2 | 4.0 | 5.0 | 1.0 | 10.0 | | | | |
| 6 | 45.2 | 26.8 | 4.0 | 8.0 | 1.0 | 15.0 | | | | |
| 7 | 55.6 | 33.8 | 6.0 | 2.5 | | | 2.1 | | | |
| 8 | 54.2 | 33.7 | 9.4 | | 0.6 | | 2.1 | | | |
| 9 | 53.8 | 32.4 | 9.6 | | | | 4.2 | | | |
| 10 | 47.6 | 32.8 | 10.0 | | | | 9.6 | | | |
| 11 | 51.3 | 25.7 | 10.0 | | | | 13.0 | | | |
| 12 | 50.9 | 35.8 | 5.7 | 3.6 | | | | 4.0 | | |
| 13 | 57.0 | 33.7 | 9.0 | | | | | | 0.3 | |
| 14 | 58.4 | 30.7 | 6.7 | 3.2 | | | | | 1.0 | |
| 15 | 55.1 | 35.7 | 8.6 | | | | | | | 0.6 |

EXAMPLE 2

This Example illustrates the heat treatment of the batch glasses described in Example 1 to induce phase separation, followed by leaching of the soft phase and washing to produce porous high−silica glass.

Glass powders, made by grinding the rods prepared according to Example 1, sieving, and separating out the −20 +80 mesh fraction, or, in some cases, the rods themselves, were placed in a resistance−heated furnace and heat treated to separate the hard and the soft phase, respectively. Subsequently the powders or rods were immersed in a hot solution of a mineral acid or in an acidic salt solution to leach out the soft phase and washed with water to remove the residuals. The time and temperature of leaching were selected to ensure complete removal of the soft phase. In general, heat treatment was carried out over a period of between 1 − 17 hours at a temperature between 500 − 650°C, and it was followed by leaching in HCl or $H_2SO_4$ for a period of between 1 − 72 hours at a temperature of 90 − 100°C. In a few cases, an aqueous solution of the acidic salt $Al(NO_3)_3$ (17%) was used as the leaching medium at room temperature. The specific heat treatment and leaching schedules selected for the glass compositions listed in Table 2 are detailed in Table 3.

Table 3

| Glass no. | Heat Treatment | | Acid | Leaching | |
|---|---|---|---|---|---|
| | Time hours | Temperature °C | | Time hours | Temperature °C |
| 1 | 2 | 550 | 3M HCl | 3 | 100 |
| 1a | 2 | 550 | 17% $Al(NO_3)_3$ | 24 | 25 |
| 1b | 2 | 550 | 17% $Al(NO_3)_3$ + 3M $NH_4OH$ (pH 3) | 24 | 25 |
| 2 | 2 | 550 | 3M HCl | 2 | 95 |
| 3 | 15 | 500 | 3M HCl | 3 | 100 |
| 4 | 17 | 500 | 3M HCl | 4 | 100 |
| 5 | 2 | 570 | 3M HCl | 3 | 100 |
| 6 | 17 | 520 | 3M HCl | 3 | 100 |
| 7 | 3 | 550 | 3M HCl | 2.5 | 95 |
| 8 | 2 | 550 | 3M HCl | 3 | 100 |
| 9 | 2 | 550 | 3M HCl | 3 | 100 |
| 10 | 17 | 540 | 1.5M $H_2SO_4$ | 3 | 100 |
| 11 | 17 | 620 | 1.5M $H_2SO_4$ | 3 | 100 |
| 12 | 17 | 555 | 3M HCl | 3 | 100 |
| 13 | 17 | 556 | 3M HCl | 1 | 100 |
| 14 | 1 | 650 | 3M HCl | 16 | 90 |
| 15 | 17 | 555 | 3M HCl | 3 | 100 |

Porous Glasses No. 13 and No. 14 were dark greenish grey. Porous Glass No. 15 was green. All other porous glasses were colorless.

EXAMPLE 3

This Example illustrates the preparation of improved cation exchange porous glass materials by treatment of porous glasses with solutions containing alkali metal cations, ammonium cations, or mixtures thereof.

The various conditions of the primary ion exchange treatment are listed in Table 4. One volume of glass powder was usually treated with 4 volumes of the ion exchange solution.

Table 4

| Ion exchange method | Details |
|---|---|
| SA | 3M $NH_4OH$ + 3M $NaNO_3$, 17 hrs, 25°C |
| A | 3M $NH_4OH$, 17 hrs, 25°C |
| N | No treatment |

EXAMPLE 4

This Example illustrates the chemical compositions of several porous glasses prepared according to the procedures outlined in Examples 1 − 3.

Following preparation, each of the tested porous glasses was rinsed with de − ionized water, dried, dissolved in an aqueous hydrofluoric acid solution, and analyzed by means of dc plasma spectrometry. The results of the analysis of each porous glass are shown in Table 5.

Table 5

| Base glass | Ion exchange | Composition, wt % | | | | | | | | |
|---|---|---|---|---|---|---|---|---|---|---|
| | | SiO$_2$ | B$_2$O$_3$ | Na$_2$O | K$_2$O | Al$_2$O$_3$ | TiO$_2$ | ZrO$_2$ | Cr$_2$O$_3$ | HfO$_2$ |
| 1 | N | 95.0 | 5.0 | <0.1 | <0.1 | | | | | |
| 1a | N | 94.2 | 1.7 | 1.1 | 1.6 | 1.4 | | | | |
| 1a | SA | 92.0 | 2.1 | 3.7 | 0.3 | 1.9 | | | | |
| 1b | A | 90.3 | 2.0 | 5.8 | 0.2 | 1.7 | | | | |
| 3 | N | 89.0 | 5.8 | <0.1 | <0.1 | | 5.2 | | | |
| 4 | N | 84.3 | 3.0 | <0.1 | | | 12.7 | | | |
| 4 | N | 84.2 | 2.7 | 0.1 | <0.1 | | 13.0 | | | |
| 5 | N | 83.3 | 0.7 | 0.1 | <0.1 | | 16.0 | | | |
| 6 | N | 75.8 | <0.1 | <0.1 | <0.1 | | 24.2 | | | |
| 7 | N | 93.9 | 2.8 | 0.1 | <0.1 | | | 3.2 | | |
| 8 | N | 94.3 | 1.4 | 0.2 | | | | 4.0 | | |
| 9 | N | 91.2 | 1.7 | 0.2 | | | | 6.9 | | |
| 10 | N | 84.9 | 1.5 | 0.1 | | | | 13.6 | | |
| 11 | N | 79.8 | 1.6 | 0.2 | | | | 18.4 | | |
| 15 | N | 92.5 | 6.4 | 0.4 | | | | | 0.7 | |
| 22 | N | 85.3 | 0.6 | 0.7 | 0.5 | | 12.8 | | | |
| 23 | N | 90.4 | 3.2 | 0.09 | | 0.05 | | 6.3 | | |
| 24 | N | 86.0 | 3.1 | 0.02 | | | | 10.9 | | |
| 25 | N | 78.4 | 8.0 | 1.4 | | 0.11 | | 12.1 | | |
| 26 | N | 74.3 | 6.0 | 0.05 | | | | 19.4 | | |
| 27 | N | 66.7 | 1.5 | 0.16 | | | | 31.6 | | |
| 28 | N | 89.8 | 3.1 | 0.08 | <0.1 | 0.06 | | | | 6.3 |

This Example shows that upon co−melting the base glass with suitable metal oxides additives, phase separation at elevated temperatures, leaching out of the soft phase and washing in water, significant amounts of metal oxide additive can be introduced into the glass (e.g., up to at least 24 mol% in the case of TiO$_2$ and at least 18 mol% in the case of ZrO$_2$). Furthermore, comparison with Example 1 shows that the concentration of metal oxide additive in the porous glass correlates with, and can be controlled by, the amount of the corresponding metal oxide introduced into the original melt.

In addition, significant amounts of metal oxide additives (e.g., between 1 and at least 4 mol% in the case of alumina) can be incorporated in porous glass cation exchange materials by combined leaching and additive impregnation with acidic solutions of a corresponding metal salt. The amount of incorporated additive is related to the concentration of the metal salt in the doping solution. Surprisingly, immersion in a concentrated ionic solution (aqueous sodium nitrate and ammonia or ammonia alone) subsequent to doping does not remove the additive from the porous glass.

It should also be noted that glasses with large amounts of metal additives, such as the high−titania glasses 5 and 6, have very low residual boron oxide levels (less than 1%).

EXAMPLE 5

This example compares the performance of porous glasses prepared according to the procedures outlined in Example 1−3 with and without the introduction of transition metal oxide additives, as ion exchange media in separating rare earth mixtures.

The separation process selected to test the glass was the removal of neodymium, an undesirable, strongly light−absorbing species, from lanthanum, a highly transparent component of oxide−based and flouride−based optical glasses and fibers. Lanthanum is also more effective than neodymium in oxide−based superconducting materials.

The decontamination factor, DF, is obtained by means of dividing the La:Nd ratio in the influent, i.e., in the solution entering the column, by the corresponding ratio in the effluent, i.e. in the solution leaving the column.

In the present Example, the test solution was an aqueous solution containing approximately 100 mg/L of La and 100 mg/L of Nd, both rare earths introduced as aqueous solutions of the respective nitrate salts. The solution was acidified with nitric acid to pH 1.3. The residence time used in the test was approximately 30 minutes. The test results for two porous glasses listed in Table 1 are shown in Table 6.

It can be concluded that the ion exchange porous glass 3−SA with the zirconia additive is effective in removing Nd from La (10 CV at DF of at least 2) while the glass without transition metal oxide additives 1−SA does not exhibit a significant capacity for rare earth separation.

Table 6

| CV* | Glass 1−SA | | | Glass 23−SA | | |
|---|---|---|---|---|---|---|
| | conc., mg/L | | DF | conc., mg/L | | DF |
| | La | Nd | | La | Nd | |
| 8 | 0.20 | 0.25 | 0.9 | 0.05 | <0.05 | >1 |
| 10 | 5.0 | 9.1 | 0.6 | <0.05 | 0.05 | <1 |
| 12 | 156 | 121 | 1.4 | 0.2 | <0.1 | >2 |
| 14 | 173 | 205 | 0.9 | 0.5 | <0.1 | >5 |
| 16 | 166 | 180 | 1.0 | 2.6 | <1 | >3 |
| 18 | 169 | 163 | 1.2 | 216 | 50.1 | 4.8 |
| 20 | 169 | 153 | 1.2 | 296 | 170 | 2.0 |
| 22 | 134 | 129 | 1.2 | 213 | 243 | 1.0 |
| Infl. | 95.9 | 107.5 | | 95.9 | 107.5 | |

* The volume of solution which has passed through the column at a particular point is given as the number of column volumes, CV, where one CV is a volume of solution equal to the volume of ion exchange material which makes up the column. The residence time, RT, is the time it takes for one CV of solution to pass through the column, and is inversely proportional to the flow rate.

EXAMPLE 6

This example illustrates the performance of several porous glasses with metal oxide additives, prepared according to the procedures outlined in Example 1−3, in separating rare earth mixture.

The test procedure was again based on the separation of neodymium from lanthanum, as in Example 5. The influent in this case was selected more realistically with respect to lanthanum purification, i.e. it contained a low concentration of Nd, approximately 50 mg/L, in the presence of a high concentration of La, approximately 2 g/L. The solution was not acidified and had a pH of 3.8 ± 0.3 in all cases. The residence time was (49 ± 7) minutes in all cases except one. The results are listed in Table 7. The capacity is defined as the number of column volumes at which the DF falls below 10.

The major conclusions based on these results can be summarized as follows:

a. Materials without the ion exchange treatment (Glasses 2 – N and 3 – N) do not exhibit significant capacity for rare earth separation.

b. The capacity of glasses with $ZrO_2$ additive for La/Nd separation increases with $ZrO_2$ content up to about 12%. Further increases in $ZrO_2$ content do not appear to result in larger capacities.

c. The capacity and decontamination factor obtained with a 13% $TiO_2$ glass are not significantly different from those abtained with glasses with similar amounts of $ZrO_2$. The capacity and decontamination factor of a 6% $HfO_2$ glass are similar to those obtained with a 6% $ZrO_2$ glass.

d. As expected, an increase in residence time greatly improves the decontamination factor.

Table 7

| GLASS | CAPACITY |
|---|---|
| 22 – N | 0 |
| 22 – SA | 15 |
| 23 – N | 0 |
| 23 – SA | 12 |
| 24 – SA | 13 |
| 25 – SA | 22 |
| 26 – SA | >24 |
| 27 – SA | 20 |
| 28 – SA | 10 |

**Claims**

1. A process for chromatographically separating from each other rare earth ions or actinide ions or mixtures thereof in solution which comprises passing said solution through an ion exchange material to separate said rare earths or actinides or mixtures thereof, said ion exchange material having a surface area of about $5 – 1500$ m$^2$/g, said ion exchange material containing at least 50 mol percent silica, said ion exchange material having been impregnated with a liquid containing alkali metal cations, Group Ib metal cations, ammonium cations, organic amines, or mixtures thereof at a pH range above about 9, and collecting a plurality of fractions of said solution as said solution passes through said ion exchange material.

2. A process according to claim 1 wherein said ion exchange material includes at least about 0.2 mol percent of a metal oxide or hydrous metal oxide, said metal oxide or hydrous metal oxide being selected from the group consisting of the transition metals of Groups IIIa, IVa, Va, VIa, VIIa, VIII, Ib, and IIb of the Periodic Table, aluminum, gallium, indium, thallium, tin, lead, bismuth, beryllium, the actinides, and mixtures thereof.

3. A process according to claim 1 in which said ion exchange material is porous glass or silica gel.

4. A process according to claim 2 wherein said metal oxide or hydrous metal oxide is selected from the group consisting of titania, zirconia, hafnia, thoria, or mixtures thereof.

5. A process according to claim 2 wherein the content of metal oxide or hydrous metal oxide in said porous glass is about 2 to about 35 mol percent.

6. A process according to claim 1 wherein said solution containing rare earth ions, actinide ions or mixtures thereof is passed through a column containing said ion exchange material.

7. A process according to claim 1, 2 or 3 wherein said rare earth ions include lanthanum and neodymium and at least one of these two rare earths is substantially separated from the other.

EP 0 333 757 B1

**8.** A process according to claim 7 wherein lanthanum is purified to contain less than about 0.1 ppm of neodymium.

**9.** A process according to claim 1 wherein the more strongly complexable rare earth ions or actinide ions are retained on the ion exchange material in preference to the less strongly complexable rare earth ions or actinide ions.

**10.** A process according to claim 1 wherein said rare earth ions include lanthanum and neodymium in which lanthanum is collected in a fraction of said solution prior to the neodymium being collected in another fraction of said solution.

**11.** An ion exchange material having a surface area of about $5-1500$ m$^2$/g, said ion exchange material being a porous glass or silica gel, said ion exchange material including at least about 0.2 mol percent of a metal oxide or hydrous metal oxide, said metal oxide or hydrous metal oxide being selected from the group consisting of the transition metals of Groups IIIa, IVa, Va, VIa, VIIa, VIII, Ib, and IIb of the Periodic Table, aluminum, gallium, indium, thallium, tin, lead, bismuth, beryllium, the actinides, and mixtures thereof, said ion exchange material containing at least about 0.3 mol percent of ammonium cations, organic amines, or mixtures thereof.

**Patentansprüche**

**1.** Verfahren zur chromatographischen Trennung von Seltenerdionen oder Actinidionen oder Mischungen davon in Lösung voneinander, welches umfaßt das Durchleiten dieser Lösung durch ein Ionenaustauschermaterial, um diese Seltenerden oder Actiniden oder Mischungen davon zu trennen, wobei das Ionenaustauschermaterial eine Oberfläche von etwa $5-1500$ m$^2$/g aufweist, das Ionenaustauscherma–terial wenigstens 50 Mol–% Kieselsäure enthält, das Ionenaustauschermaterial mit einer Alkalimetallkationen, Gruppe Ib–Metallkationen, Ammoniumkationen, organische Amine oder Mischungen davon enthaltenden Flüssigkeit bei einem pH–Bereich oberhalb von etwa 9 imprägniert worden ist, und das Sammeln einer Mehrzahl von Fraktionen der Lösung während die Lösung durch dieses Ionenaustauschermaterial hindurchtritt.

**2.** Verfahren nach Anspruch 1, worin das Ionenaustauschermaterial wenigstens etwa 0,2 Mol–% eines Metalloxides oder wasserhaltigen Metalloxids einschließt, wobei dieses Metalloxid oder wasserhaltige Metalloxid ausgewählt ist aus der Gruppe, die besteht aus Übergangsmetallen der Gruppen IIIa, IVa, Va, VIa, VIIa, VIII, Ib und IIb des Periodensystems, Aluminium, Gallium, Indium, Thallium, Zinn, Blei, Wismuth, Beryllium, den Actiniden und Mischungen davon.

**3.** Verfahren nach Anspruch 1, in welchem das Ionenaustauschermaterial poröses Glas oder Kieselgel ist.

**4.** Verfahren nach Anspruch 2, worin das Metalloxid oder wasserhaltige Metalloxid ausgewählt ist aus der Gruppe, die besteht aus Titanoxid, Zirkonoxid, Hafniumoxid, Thoriumoxid oder Mischungen davon.

**5.** Verfahren nach Anspruch 2, worin der Gehalt an Metalloxid oder wasserhaltigem Metalloxid in dem porösen Glas etwa 2 bis etwa 35 Mol–% beträgt.

**6.** Verfahren nach Anspruch 1, worin die Lösung, die Seltenerdionen, Actinidionen oder Mischungen davon enthält, durch eine Säule geleitet wird, die das Ionenaustauschermaterial enthält.

**7.** Verfahren nach Anspruch 1, 2 oder 3, worin die Seltenerdionen Lanthan und Neodym einschließen und wenigstens eine dieser zwei Seltenerden von der anderen wesentlich getrennt wird.

**8.** Verfahren nach Anspruch 7, worin Lanthan so gereinigt wird, daß es weniger als etwa 0,1 ppm Neodym enthält.

**9.** Verfahren nach Anspruch 1, worin die stärker komplexierbaren Seltenerdionen oder Actinidionen im Vergleich zu den weniger stark komplexierbaren Seltenerdionen oder Actinidionen bevorzugt auf dem Ionenaustauschermaterial zurückgehalten werden.

11

**10.** Verfahren nach Anspruch 1, worin die Seltenerdionen Lanthan und Neodym einschließen, in welchem Lanthan in einer Fraktion der Lösung gesammelt wird, bevor das Neodym in einer weiteren Fraktion der Lösung gesammelt wird.

**11.** Ionenaustauschermaterial mit einer Oberfläche von etwa $5-1500$ m$^2$/g, wobei das Ionenaustauscher$-$ material ein poröses Glas oder Kieselgel ist, wobei das Ionenaustauschermaterial wenigstens etwa 0,2 Mol$-$% eines Metalloxids oder wasserhaltigen Metalloxids beinhaltet, wobei das Metalloxid oder wasserhaltige Metalloxid ausgewählt ist aus der Gruppe, die besteht aus Übergangsmetallen der Gruppen IIIa, IVa, Va, VIa, VIIa, VIII, Ib und IIb des Periodensystems, Aluminium, Gallium, Indium, Thallium, Zinn, Blei, Wismuth, Beryllium, den Actiniden und Mischungen davon, wobei das Ionenaus$-$ tauschermaterial wenigstens etwa 0,3 Mol$-$% Ammoniumkationen, organische Amine oder Mischungen davon enthält.

**Revendications**

**1.** Procédé pour séparer par chromatographie les uns des autres des ions de terres rares ou des ions actinides ou un de leurs mélanges en solution, qui comprend de faire passer ladite solution à travers une matière échangeuse d'ions pour séparer lesdites terres rares ou actinides ou leurs mélanges, ladite matière échangeuse d'ions ayant une surface spécifique d'environ 5 à 1 500 m$^2$/g, ladite matière échangeuse d'ions contenant au moins 50% en moles de silice, ladite matière échangeuse d'ions ayant été imprégnée avec un liquide contenant des cations des métaux alcalins, des cations des métaux du groupe Ib, des cations ammonium, des amines organiques ou un de leurs mélanges à un pH au$-$ dessus d'environ 9, et à recueillir un ensemble de fractions de ladite solution quand ladite solution traverse ladite matière échangeuse d'ions.

**2.** Procédé selon la revendication 1, dans lequel ladite matière échangeuse d'ions comprend au moins environ 0,2% en moles d'un oxyde métallique ou d'un oxyde métallique hydraté, ledit oxyde métallique ou oxyde métallique hydraté étant choisi dans le groupe constitué des métaux de transition des groupes IIIa, IVa, Va, VIa, VIIa, VIII, Ib, et IIb du tableau périodique, de l'aluminium, du gallium, de l'indium, du thallium, de l'étain, du plomb, du bismuth, du béryllium, des actinides, et de leurs mélanges.

**3.** Procédé selon la revendication 1, dans lequel ladite matière échangeuse d'ions est un verre poreux ou un gel de silice.

**4.** Procédé selon la revendication 2, dans lequel ledit oxyde métallique ou oxyde métallique hydraté est choisi dans le groupe constitué de l'oxyde de titane, de la zircone, de l'oxyde d'hafnium, de l'oxyde de thorium, ou de leurs mélanges.

**5.** Procédé selon la revendication 2, dans lequel la teneur d'oxyde métallique ou d'oxyde métallique hydraté dans ledit verre poreux est d'environ 2 à environ 35 pour$-$cent en moles.

**6.** Procédé selon la revendication 1, dans lequel ladite solution contenant des ions de terres rares, des ions actinides ou un de leurs mélanges, traverse une colonne contenant ladite matière échangeuse d'ions.

**7.** Procédé selon la revendication 1, 2 ou 3, dans lequel lesdits ions de terres rares comprennent le lanthane, le néodyme et au moins une de ces deux terres rares est pratiquement séparée de l'autre.

**8.** Procédé selon la revendication 7, dans lequel le lanthane est purifié pour contenir moins de 0,1 ppm environ de néodyme.

**9.** Procédé selon la revendication 1, dans lequel les ions de terres rares ou les ions actinides complexa$-$ bles plus fortement sont retenus sur la matière échangeuse d'ions de préférence aux ions de terre rares ou aux ions actinides moins fortement complexables.

**10.** Procédé selon la revendication 1, dans lequel lesdits ions de terres rares comprennent le lanthane et le néodyme et dans lequel le lanthane est recueilli dans une fraction de ladite solution avant le néodyme

EP 0 333 757 B1

qui est recueilli dans une autre fraction de ladite solution.

11. Matière échangeuse d'ions ayant une surface spécifique d'environ 5 à 1 500 m$^2$/g, ladite matière échangeuse d'ions étant un verre poreux ou un gel de silice, ladite matière échangeuse d'ions comprenant au moins environ 0,2 pour‑cent en moles d'un oxyde métallique ou d'un oxyde métallique hydraté, ledit oxyde métallique ou oxyde métallique hydraté étant choisi dans le groupe constitué des métaux de transition des groupes IIIa, IVa, Va, VIa, VIIa, VIII, Ib, et IIb du tableau périodique, de l'aluminium, du gallium, de l'indium, du thallium, de l'étain, du plomb, du bismuth, du béryllium, des actinides, et de leurs mélanges, ladite matière échangeuse d'ions contenant au moins 0,3 pour‑cent en moles de cations d'ammonium, d'amines organiques ou d'un de leurs mélanges.